## Europäisches Patentamt
## European Patent Office
## Office européen des brevets

(19)

(11) Veröffentlichungsnummer: **0 111 686**
**B1**

(12) # EUROPÄISCHE PATENTSCHRIFT

(45) Veröffentlichungstag der Patentschrift:
18.03.87

(51) Int. Cl.⁴: **C 08 G 6/02**

(21) Anmeldenummer: 83110665.3

(22) Anmeldetag: 26.10.83

(54) **Benzinlösliche, hydrierte Alkylarylketon/Formaldehyd-Harze sowie deren Herstellung.**

(30) Priorität: 11.11.82 DE 3241735
24.09.83 DE 3334631

(43) Veröffentlichungstag der Anmeldung:
27.06.84 Patentblatt 84/26

(45) Bekanntmachung des Hinweises auf die Patenterteilung:
18.03.87 Patentblatt 87/12

(84) Benannte Vertragsstaaten:
AT BE DE FR GB NL SE

(56) Entgegenhaltungen:
DE-C-711 888
DE-C-826 974
DE-C-870 022
DE-C-907 348

(73) Patentinhaber: **HÜLS AKTIENGESELLSCHAFT, Patentabteilung / PB 15 - Postfach 13 20, D-4370 Marl 1 (DE)**

(72) Erfinder: **Dörffel, Jörg, Dr., Bitterfelder Strasse 4, D-4370 Marl (DE)**
Erfinder: **Lange, Erhard, Dr., Riegestrasse 14, D-4370 Marl (DE)**
Erfinder: **Otte, Werner, Dr., Lipper Weg 195, D-4370 Marl (DE)**
Erfinder: **Heinrich, Friedrich, Dr., Bitterfelder Strasse 7 a, D-4370 Marl (DE)**

## Beschreibung

Gegenstand der Erfindung sind benzinlösliche, hydrierte Alkylarylketon/Formaldehyd-Harze sowie deren Herstellung.

Alkylarylketon/Formaldehyd-Harze sind bereits seit sehr langer Zeit in der Technik bekannt. Die ihnen anhaftenden Nachteile können durch eine hydrierende Behandlung zum Teil ausgeglichen werden.

Ein derartiges Verfahren wird in DE-C-870 022 beschrieben. Dieser Stand der Technik lehrt, daß die Ausgangsharze je nach Wahl der Reaktionsbedingungen unterschiedlich weit hydriert werden können. Hierbei wird mit Katalysatoren, die zumindest teilweise Nickel enthalten, sowie mit Temperaturen gearbeitet, die bis zu 250 °C betragen können.

Die Patentschrift lehrt, daß mit steigendem Hydrierungsgrad, d.h. mit abfallendem Sauerstoffgehalt, Produkte erhalten werden, die immer mehr in unpolaren Lösemitteln wie z. B. Testbenzin löslich werden. Gleichzeitig fällt aber auch der Erweichungspunkt der Produkte stark ab. Wenig hydrierte Harze wiederum besitzen zwar einen hohen Erweichungspunkt, jedoch sind sie in unpolaren Lösemitteln nicht löslich.

Deutlicher Nachteil der in Benzin sehr gut löslichen Harze ist ihr niedriger Erweichungspunkt, so daß diese Harze wiederum für die Praxis wenig brauchbar sind.

Aufgabe war es, ein Harz zu finden, dessen gute Löslichkeit in Benzin erhalten bleibt, das aber gleichzeitig einen der Praxis gerecht werdenden hohen Erweichungspunkt aufweist.

Diese Aufgabe wird erfindungsgemäß durch benzinlösliche, hydrierte Alkylarylketon/Formaldehyd-Harze, deren Alkylarylketon-Komponente einen Alkylrest mit 1 bis 4, vorzugsweise 1 bis 2 C-Atomen in der Kohlenstoffkette und einen Arylrest mit 6 bis 10, vorzugsweise 6 C-Atomen im Kohlenstoffgerüst besitzt, mit einem Sauerstoffgehalt von >6, vorzugsweise 7 bis 9,5 Massen-% und mit einem Erweichungspunkt von 75 bis 135 °C, und insbesondere einem Erweichungspunkt von 85 bis 125 °C, erfüllt.

Ein weiterer Gegenstand der Erfindung ist die Herstellung der oben näher gekennzeichneten hydrierten Harze, indem ein Alkylarylketon/Formaldehyd-Harz bei einem Wasserstoffdruck von > 200 bar, vorzugsweise 250 bis 350 bar, und bei Temperaturen im Bereich von 180 bis 300 °C, vorzugsweise 200 °C bis 250 °C, in Gegenwart von Palladium, Palladium/Kupfer oder Palladium/Nickel als Katalysator hydriert wird.

Der Katalysator enthält 0,1 bis 10 Massen-% Palladium (gerechnet als Metall). Als Trägermaterial kommen in erster Linie Aluminiumoxid. Aktivkohle, Kieselgrunder Aluminiumsilikate infrage. Bevorzugt werden solche Katalysatoren eingesetzt, die Palladium in einer Konzentration von 0,1 bis 1 Massen-% auf der Oberfläche eines Aluminiumoxids -

vorzugsweise in der γ- oder η-Modifikation - enthalten. Die spezifische Oberfläche des Katalysators soll vorzugsweise 50 bis 500 m²/g, insbesondere 150 bis 250 m²/g, betragen. Insbesondere für eine diskontinuierliche Arbeitsweise eignet sich neben Aluminiumoxid Aktivkohle als Trägermaterial. In diesem Fall enthält der Katalysator 1 bis 10 Massen-% Palladium.

Eine weitere arbeitsweise geht von den erfindungsgemäßen Palladiumkatalysatoren in Verbindung mit Nickelkatalysatoren bzw. Kupferkatalysatoren als zusätzlichen Cokatalysatoren aus, wobei letztere mit Chrom oder Chrom/Nickel aktiviert sein können. Zur Herstellung der neuen Harze können auch Katalysatoren eingesetzt werden, die nur Nickel enthalten. Diese Arbeitsweise wird jedoch nicht beansprucht.

Hierdurch können bei diskontinuierlicher Arbeitsweise in kürzeren Zeiten oder bei kontinuierlicher Hydrierung im Festbett-Reaktor bei höheren Belastungen erfindungsgemäße Produkte erhalten werden. Bei der kontinuierlichen Arbeitsweise empfiehlt es sich, die Katalysatoren zu schichten bzw. zwei unterschiedlich beschickte Hydrier-Reaktoren nacheinander zu schalten, wobei die Hydrierung vorteilhafterweise zuerst am Palladium-Katalysator und dann an dem zweiten Katalysator, vorzugsweise einem aktivierten Kupfer-Katalysator, erfolgt. Das Volumenverhältnis von Palladium-Katalysator/Nickel- bzw. Kupfer-Katalysator liegt bei 1 : 0,05 bis 0,3.

Als Ausgangsprodukte eignen sich beispielsweise Kondensationsprodukte aus Acetophenon, Methylnaphthylketon, Acetylethylbenzol sowie Alkylphenylketone mit einem längeren Alkylrest, z. B. Propiophenon, Butyrophenon, Acetyltetrahydronaphthalin bzw. Mischungen davon, einerseits, und Formaldehyd oder formaldehydabspaltenden Verbindungen z. B. Paraformaldehyd, andererseits.

Derartige Harze werden, wie beispielsweise in der DE-PS 892 975 beschrieben, vorzugsweise durch Kondensation der Alkylarylketone mit etwa äquivalenten Mengen Formaldehyd in Gegenwart größerer Mengen Alkali hergestellt. Darüber hinaus können natürlich auch Harze eingesetzt werden, die durch Einsatz geringerer Formaldehydmengen erhalten werden. Solche Produkte sind beispielsweise in der DE-PS 897 484 erwähnt. Insbesondere bevorzugt sind die in DE-PS 892 975 und DE-OS 33 24 287 beschriebenen Acetophenonharze.

Als Ausgangsprodukte können grundsätzlich auch die in DE-PS 870 022 beschriebenen teilhydrierten, ethanollöslichen, im Sauerstoffgehalt praktisch unveränderten Harze eingesetzt werden.

Die Hydrierung wird vorzugsweise in Gegenwart von Lösemitteln, wie z.B. Butanol, i-Butanol, Tetrahydrofuran, Dioxan oder anderen Ethern die Alkylethern von Ethylenglykol oder Diethylenglykol durchgeführt. Die Auswahl dieser Lösemittel sollte vorteilhafterweise so getroffen werden, daß sowohl das Ausgangs- wie Endprodukt in ihnen löslich ist. Grundsätzlich kann auch lösemittelfrei in der Schmelze gearbeitet werden. Wegen der leichteren Handhabung und einer einheitlicheren Produktqualität ist die kontinuierliche Hydrierung in Gegenwart von Lösemitteln vorzuziehen.

Für die erfindungsgemäßen Harze sind die Hydrierbedingungen wesentlich. Wird der Wasserstoffdruck zu gering gewählt, werden Harze mit zu niedrigen Erweichungspunkten erhalten. Analog liegen die Verhältnisse bei der Reaktionstemperatur. Bei zu hoher Temperatur fällt der Erweichungspunkt unerwünscht stark ab. Bei zu niedrig gewählter Temperatur werden die erfindungsgemäßen Harze erst in einer wirtschaftlich nicht vertretbaren Zeit erhalten.

Der Stand der Technik lehrt, daß mit fortschreitender Hydrierung, d. h. mit sinkendem Sauerstoffgehalt, der Ausgangsharze ihre Benzinlöslichkeit bis zu dem gewünschten Maße ansteigt, daß aber gleichzeitig der Erweichungspunkt dann soweit absinkt, daß die erhaltenen hydrierten Harze in vielen Fällen für die Praxis untauglich sind. Durch die Erfindung wird es nun möglich, die Ausgangsharze durch Hydrierung soweit zu modifizieren, daß sie ebenfalls die hohe Löslichkeit in Benzin aufweisen, ohne daß jedoch der Erweichungspunkt wesentlich absinkt. Die erfindungsgemäßen Harze weisen Erweichungspunkte auf, die sich in der Größenordnung der Ausgangsharze bewegen oder sogar darüber liegen.

Die erfindungsgemäßen Harze sind farblos, licht-, wärme- und witterungsbeständig. Aufgrund ihrer guten Verträglichkeit können sie zur Verbesserung der Härte, des Glanzes und der Haftfestigkeit lufttrocknenden Maler- und Autoreparaturlacken zugesetzt werden. Zusätzlich besteht die Möglichkeit, sie auch Überzugsmitteln auf Basis gesättigter Polyester zur Verbesserung des Glanzes und der Haftfestigkeit zuzusetzen.

Die in den Beispielen angegebenen Erweichungspunkte wurden nach der Schmelzpunkt-Kapillarmethode (Aufheizgeschwindigkeit: 2 ° C/min) bestimmt. Als Erweichungspunkt gilt die Temperatur, bei der eine pulverisierte Probe zusammensintert und transparent wird.

Mit Buchstaben gekennzeichnete Beispiele sind nicht erfindungsgemäß. Die Verfahrensweisen nach Beispielen 1 bis 3 fallen nicht unter der Anspruch 5.

**Beispiele**

**Beispiel 1**

In einem Autoklaven wurden 165 g eines Acetophenon/ Formaldehyd-Harzes - hergestellt gemäß Beispiel 2 der DE-PS 892 975 (Erweichungspunkt: 68° C, Sauerstoffgehalt: 12,8 Massen-%) - in Gegenwart von 385 g Isobutanol und 16,5 g eines handelsüblichen (Harshaw Ni 5124) Nickelkontaktes (80,5 Massen-% $NiO$, 9,1 Massen-% $SiO_2$, 0,6 Massen-% $CaO$, 0,7 Massen-% $MgO$, 0,5 Massen-% $Cr_3O_4$, 0,3 Massen-% $Fe_2O_3$ und 7,5 Massen-% $Al_2O_3$, Glühverlust 0,8 Massen-%) bei einem Wasserstoffdruck von 300 bar und einer Temperatur von 150 °C 2 Stunden hydriert, wobei 102 l Wasserstoff (bezogen auf 0 °C und 1 bar) aufgenommen wurden. Nach Entfernen des Lösemittels im Vakuum bei 175 ° C wurde ein wasserhelles, sprödes Harz mit einem Erweichungspunkt von 86 °C (Sauerstoffgehalt: 7,6 Massen-%) erhalten. Das Harz löste sich einwandfrei in n-Hexan, Testbenzin (Siedebereich 145 bis 200 °C; 17 Vol-% aromat. Anteile) und in Normalbenzin (Siedebereich: 60 bis 95 °C; 0,8 Vol-% aromat. Anteile). In Ethanol war das Harz unlöslich.

**Beispiel 2**

550 g einer 30 %igen Lösung eines handelsüblichen ethanollöslichen hydrierten Acetophenon-Harzes (Erweichungspunkt: 113 ° C, Sauerstoffgehalt: 12,2 Massen-%) (Kunstharz SK) in i-Butanol wurde bei einem Wasserstoffdruck von 300 bar und einer Temperatur von 175 ° C in Gegenwart von 16,5 g Raney-Nickel 8 Stunden in einem Stahlautoklaven hydriert, wobei insgesamt 96 l Wasserstoff (bezogen auf 0° C und 1 bar) aufgenommen wurden. Nach vollständiger Entfernung des i-Butanols wurde ein wasserklares Harz mit einem Erweichungspunkt von 81 °C und einem Sauerstoffgehalt von 6,6 Massen-% erhalten. Das Produkt war sowohl in Ethanol als auch in n-Hexan, Testbenzin und Normalbenzin löslich.

**Beispiel 3**

In einer 2,3 l Festbett- Hydrierapparatur, gefüllt mit dem in Beispiel 1 beschriebenen Ni-Katalysator wurde eine Acetophenon/Formaldehyd-Harzlösung (entsprechend Beispiel 1) kontinuierlich über einen Zeitraum von 2 Monaten bei einer Temperatur von 180 °C, einem $H_2$-Druck von 300 bar und einer Belastung von 0,4 bis 0,5 l Harzlösung/l Kontakt.h hydriert. Der Versuch wurde nach den 2 Monaten willkürlich abgebrochen, ohne daß ein merkliches Nachlassen der Katalysatoraktivität festgestellt werden konnte. Die erhaltenen Produkte wiesen einen Sauerstoffgehalt von 7,3 Massen-% und einen Erweichungspunkt von 88 °C auf. Sie waren einwandfrei in Ethanol, n-Hexan, Testbenzin und Normalbenzin löslich.

**Beispiel A**

Entsprechend Beispiel 2 der DE-PS 870 022 wurde eine 50 %ige Lösung eines hydrierten Acetophenon/Formaldehyd-Harzes (Erweichungspunkt: 68 °C, Sauerstoffgehalt: 12,8 Massen-%) in Butanol in Gegenwart von 10 % Raney-Nickel (bezogen auf das Harz) bei einem Wasserstoffdruck von 120 bar und einer Temperatur von 180° C in einem Stahlautoklaven hydriert. Der Versuch wurde bei einer Wasserstoffaufnahme von 50 l/100 g Acetophenonharz (bezogen auf 0 °C und 1 bar) abgebrochen. Das erhaltene Produkt, das einwandfrei in n-Hexan, Testbenzin und Normalbenzin löslich war, hatte einen Sauerstoffgehalt von nur 4,2 Massen-% und einen Erweichungspunkt von 48 °C.

**Beispiel 4**

In einem Autoklaven wurden 165 g des im Beispiel 1 eingesetzten Acetophenon/Formaldehyd-Harzes in Gegenwart von 385 g Isobutanol und 50 g eines handelsüblichen Pd-Kontaktes (0,5 % Pd auf $Al_2O_3$) bei einem Wasserstoffdruck von 300 bar und einer Temperatur von 200 °C 4 Stunden hydriert, wobei 124 l Wasserstoff (bezogen auf 0 °C und 1 bar) aufgenommen wurden. Nach Entfernung des Lösemittels im Vakuum bei 175° C) erhielt man ein wasserhelles, sprödes Harz mit einem Erweichungspunkt von 93 ° C (Sauerstoffgehalt: 8,8 Massen-%), das sich einwandfrei in n-Hexan, Testbenzin, Normalbenzin und Ethanol löste.

**Beispiel 5**

In einer 400 ml Festbett-Hydrierapparatur, gefüllt mit einer Katalysatorschichtung aus 350 ml des in Beispiel 4 eingesetzten Pd-Kontaktes und 50 ml eines ebenfalls handelsüblichen Cu/Cr-Kontaktes (33 % CuO, 37 % $Cr_2O_3$, 8 bis 10 % CaO, 8,5 bis 10 % $SiO_2$) wurde eine 30 Massen-%ige Lösung des in Beispiel 1 beschriebenen Acetophenon/Formaldehyd-Harzes in Tetrahydrofuran kontinuierlich bei einer Temperatur von 220° C und einem Wasserstoffdruck von 300 bar bei einer Belastung von 0,4 l Harzlösung/l Kontakt.h hydriert. Dabei lief die Harzlösung zuerst über den Pd-, dann über den Cu/Cr-Kontakt. Der Versuch wurde willkürlich nach 14 d abgebrochen, ohne daß man ein merkliches Nachlassen der Katalysatoraktivität feststellte. Das erhaltene Produkt hatte einen Sauerstoffgehalt von 8,6 Massen-% und einen Erweichungspunkt von 95°C. Das Harz war einwandfrei in Ethanol, n-Hexan, Testbenzin und Normalbenzin löslich.

**Beispiel 6**

In einem Autoklaven wurden 165 g eines gemäß Versuch 3 der DE-OS 33 24 287 in Gegenwart von Triethylbenzylammoniumchlorid hergestellten Acetophenonharzes (Erweichungspunkt: 99°C, Sauerstoffgehalt: 12,55 Massen-%) in 385 g Isobutanol gelöst und wie im Beispiel 4 beschrieben hydriert. Man erhielt ein Harz mit einem Erweichungspunkt von 117°C (Sauerstoffgehalt: 7,6 Massen-%), das sich einwandfrei in n-Hexan, Testbenzin, Normalbenzin und Ethanol löste.

**Patentansprüche**

1. Benzinlösliches, hydriertes Alkylarylketon/Formaldehyd-Harz, dessen Alkylarylketon-Komponente einen Alkylrest mit 1 bis 4 C-Atomen in der Kohlenstoffkette und einen Arylrest mit 6 bis 10 C-Atomen im Kohlenstoffgerüst besitzt, mit einem Sauerstoffgehalt > 6 Massen-% und einem Erweichungspunkt im Bereich von 75 bis 135 °C.

2. Benzinlösliches, hydriertes Alkylerylketon/Formaldehyd-Harz gemäß Anspruch 1,
dadurch gekennzeichnet,
daß es einen Sauerstoffgehalt im Bereich 7 bis 9,5 Massen-% aufweist.

3. Benzinlösliches, hydriertes Alkylarylketon/Formaldehyd-Harz gemäß Anspruch 1,
dadurch gekennzeichnet,
daß es einen Erweichungspunkt im Bereich von 85 bis 125 °C aufweist.

4. Verfahren zur Herstellung eines benzinlöslichen, hydrierten Alkylarylketon/Formaldehyd-Harzes gemäß den Ansprüchen 1 bis 3,
dadurch gekennzeichnet,
daß ein Alkylarylketon/Formaldehyd-Harz bei einem Wasserstoffdruck > 200 bar und bei Temperaturen im Bereich von 180° C bis 300 °C in Gegenwart eines Palladium-, Palladium/Kupfer- oder Palladium/Nickel-Katalysators, der 0,1 bis 10 Massen-% Palladium enthält, hydriert wird.

5. Verfahren zur Herstellung eines benzinlöslichen, hydrierten Alkylarylketon/Formaldehyd-Harzes gemäß Anspruch 4,
dadurch gekennzeichnet,
daß die Hydrierung bei Temperaturen im Bereich von 200 bis 250 °C durchgeführt wird.

## Claims

1. A hydrogenated alkylarylketone/formaldehyde resin which is soluble in benzene, the alkylarylketone component of which has an alkyl moiety of 1 to 4 carbon atoms in the carbon chain and an aryl moiety of 6 to 10 carbon atoms in the carbon skeleton, and which has a oxygen content of more than 6% by mass and a softening point in the range from 75 to 135°C.

2. A benzene-soluble, hydrogenated alkylarylketone/ formaldehyde resin according to claim 1, characterised in that it has an oxygen content in the range from 7 to 9.5% by mass.

3. A benzene-soluble, hydrogenated alkylarylketone/ formaldehyde resin according to claim 1, characterised in that it has a softening point in the range from 85 to 125°C.

4. A process for the production of a benzene-soluble, hydrogenated alkylarylketone/formaldehyde resin according to any of claims 1 to 3, characterised in that an alkylarylketone/formaldehyde resin is hydrogenated at a hydrogen pressure of more than 200 bar and a temperature in the range from 180 to 300°C in the presence of a palladium, palladium/copper or palladium/nickel catalyst which contains 0.1 to 10% by mass of palladium.

5. A process for the production of a benzene-soluble, hydrogenated alkylarylketone/formaldehyde resin according to claim 4, characterised in that the hydrogenation is carried out at a temperature in the range from 200 to 250°C.

## Revendications

1. Résine hydrogénée, soluble dans l'essence, obtenue à partir d'une alkyl-aryl-cétone et de formaldéhyde, dont le constituant alkyl-aryl-cétone possède un radical alkyle comportant de 1 à 4 atomes de carbone dans la chaîne carbonée et possède, dans le squelette carboné, un radical aryle comportant de 6 à 10 atomes de carbone, et présentant une teneur en oxygène supérieure à 6 % en masse et un point de ramollissement compris dans un domaine allant de 75 à 135°C.

2. Résine hydrogénée, soluble dans l'essence, obtenue à partir d'une alkyl-aryl-cétone et de formaldéhyde, selon la revendication 1, caractérisée par le fait qu'elle présente une teneur en oxygène comprise dans un domaine allant de 7 à 9,5 % en masse.

3. Résine hydrogénée, soluble dans l'essence, obtenue à partir d'une alkyl-aryl-cétone et de formaldéhyde, selon la revendication 1, caractérisée par le fait qu'elle présente un point de ramollissement compris dans un domaine allant de 85 à 125°C.

4. Procedé pour préparer une résine hydrogénée, soluble dans l'essence, à base d'une alkyl-aryl-cétone et de formaldéhyde selon les revendications 1 à 3, caractérisé par le fait qu'en présence d'un catalyseur au palladium, au palladium et au cuivre ou au palladium et au nickel, qui renferme de 0,1 à 10 % en masse de palladium, on hydrogène, sous une pression supérieure à 200 bars et à des températures comprises dans un domaine de 180 à 300°C, une résine à base d'une alkyl-aryl-cétone et de formaldéhyde.

5. Procédé selon la revendication 4, pour préparer une résine hydrogénée, soluble dans l'essence, obtenue à partir d'une alkyl-aryl-cétone et de formaldéhyde, caractérisé par le fait que l'hydrogénation est effectuée à des températures comprises dans un domaine allant de 200 à 250°C.